# EUROPEAN PATENT APPLICATION

(11) **EP 1 592 113 A1**
(43) Date of publication of application: **02.11.2005**
(21) Application number: 04425293.0
(22) Date of filing: 29.04.2004
(51) Int. Cl.: H02K 17/02

(54) **A two-pole electric motor with 100mm shaft height**

(71) Applicant: Pedrollo S.p.a., 37047 San Bonifacio (Verona) (IT)
(72) Inventor: Pedrollo , Silvano, 37121 Verona (IT)
(74) Representative: Ponchiroli, Simone

(57) **Abstract**

A two-pole electric motor with 100 mm shaft height, comprising a stator lamination pack consisting of a plurality of stator laminations (1) and a rotor lamination pack consisting of a plurality of rotor laminations (2). In each stator lamination (1) there are thirty six stator slots (3), and in each rotor lamination (2) there are twenty eight rotor slots (4).

## Description

The present invention relates to a two-pole electric motor with 100 mm shaft height, equipped with a stator lamination pack and a rotor lamination pack, in which each stator or rotor lamination has a plurality of respective stator and rotor slots made in it.

In the electric motors sector, the shaft height is defined as the height of the central axis of the driving shaft relative to the surface on which the motor rests.

Two-pole electric motors with 100 mm shaft height (standardised value) are in particular designed for the activation of hydraulic pumps with a high number of revolutions.

At present, this type of electric motor has stator and rotor laminations which respectively have a maximum of twenty four and eighteen slots.

Such limit values are currently dictated by the cost of preparing the stator and rotor windings in the slots.

It is widely agreed that a further increase in the number of slots cannot improve motor performance.

The power limits of this type of two-pole motor are currently dictated by stator winding overheating.

Once the maximum temperature at which the motor can operate in a steady state has been established, it is easy to identify the maximum nominal current intensity which can be absorbed by the motor and so its power.

In this situation, the technical need which forms the basis for the present invention is the production of a two-pole electric motor with 100 mm shaft height which is more powerful than similar conventional motors.

The technical need of the present invention is also the production of a two-pole electric motor with 100 mm shaft height, with better performance than similar conventional motors.

The technical need specified and the aims indicated are substantially achieved by a two-pole electric motor with 100 mm shaft height as described in the claims herein.

Further features and the advantages of the present invention are more clearly illustrated in the detailed description which follows, with reference to the accompanying drawings, which illustrate a preferred embodiment merely by way of example, without restricting the scope of the inventive concept, of a two-pole electric motor with 100 mm shaft height, in which:

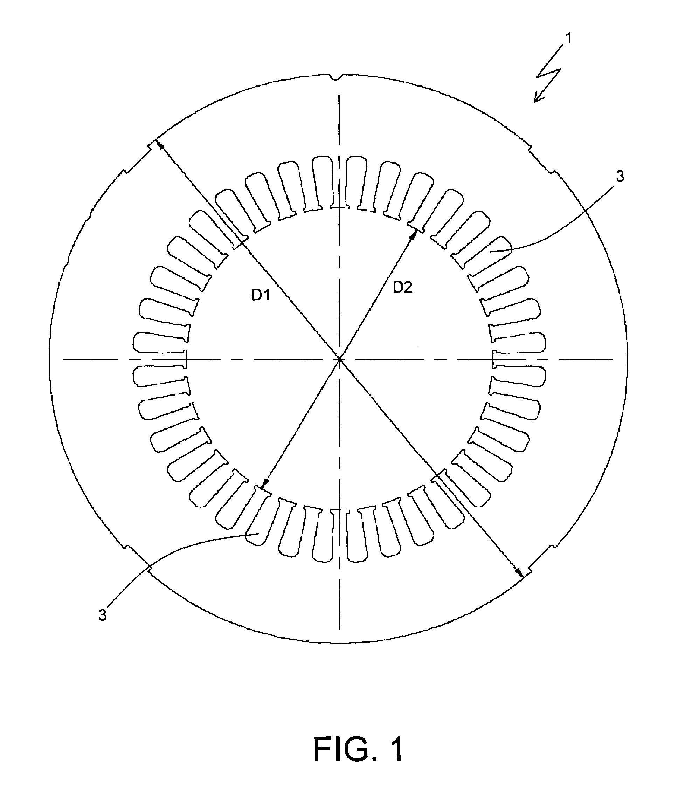

- Figure 1 is a front view of a stator lamination of a two-pole electric motor with 100 mm shaft height made in accordance with the present invention;

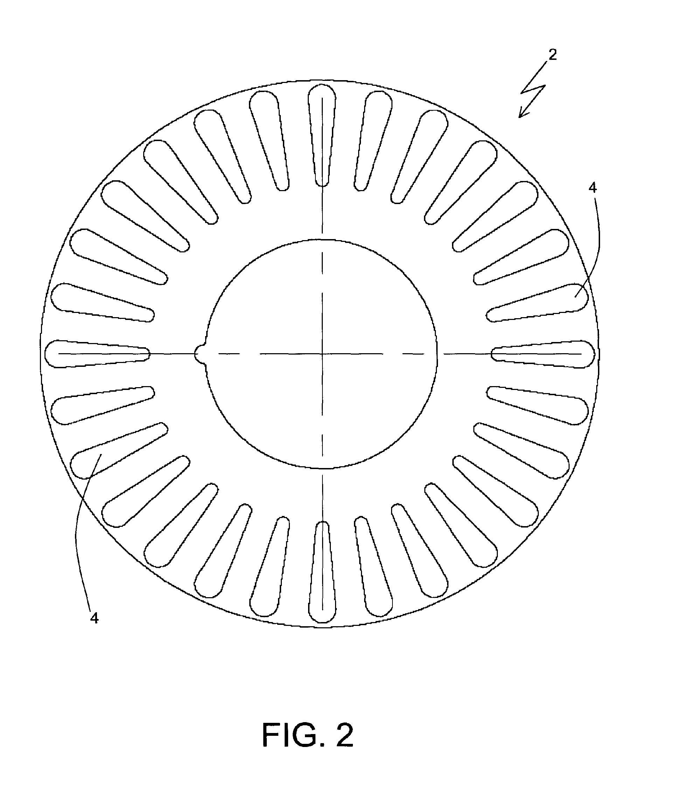

- Figure 2 is a front view of a rotor lamination of the two-pole electric motor with 100 mm shaft height in accordance with the present invention;
- Figure 3 is a partial front view of the stator lamination illustrated in Figure 1 connected to the rotor lamination illustrated in Figure 2;
- Figure 4 illustrates a detail of the stator lamination shown in Figure 1; and
- Figure 5 illustrates a detail of the rotor lamination shown in Figure 2.

With reference to the accompanying drawings, the numerals 1 and 2 respectively denote as a whole a stator lamination 1 and a rotor lamination 2 of a two-pole electric motor with 100 mm shaft height made according to the present invention.

The motor comprises a stator lamination pack (not illustrated) consisting of a plurality of stator laminations 1 and a rotor lamination pack (also not illustrated) consisting of a plurality of rotor laminations 2.

Both the stator laminations 1 and the rotor laminations have the shape of a ring. The rotor laminations 2 are mounted coaxially inside the stator laminations 1, whilst the motor shaft (not illustrated) is mounted coaxially inside the rotor laminations.

In each stator lamination 1 there is a plurality of stator slots 3 evenly distributed along the inner edge of the stator lamination 1.

Similarly, in each rotor lamination 2 there is a plurality of rotor slots 4 evenly distributed along its outer edge.

In particular, according to the present invention, there are thirty six stator slots 3 in each stator lamination 1, and twenty eight rotor slots 4 in each rotor lamination 2.

In the preferred embodiment illustrated in the accompanying drawings, the stator slots 3 are half-closed, whilst the rotor slots 4 are closed.

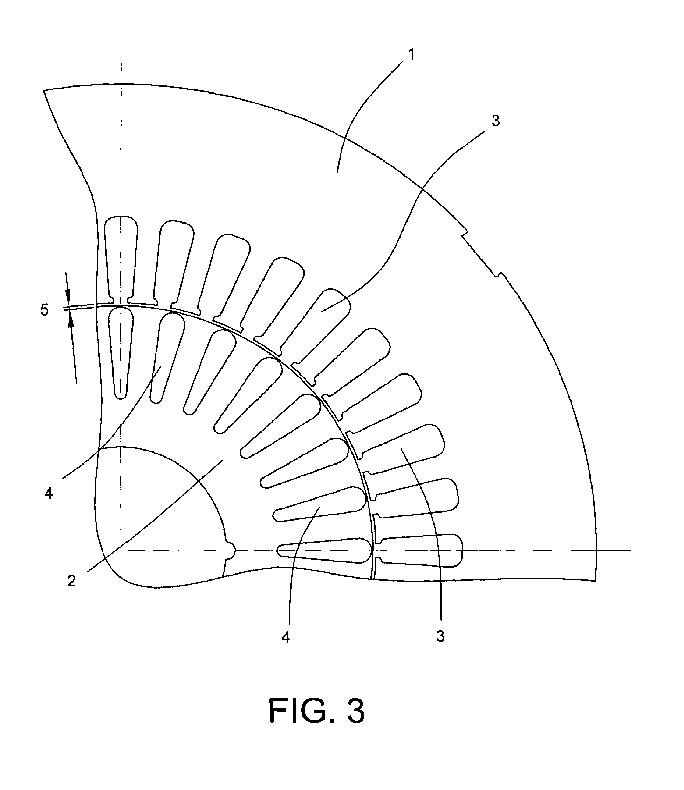

Moreover, between the stator lamination pack and the rotor lamination pack there is an air gap 5 measuring less than 1 mm, which in the preferred embodiment illustrated is 0.5 mm (Figure 3).

According to a preferred but not exclusive embodiment of the present invention, each stator lamination 1 has an external diameter D1 of between 155 and 170 mm, but preferably around 162 mm, and an internal diameter D2 of between 80 and 90 mm, but preferably around 86 mm.

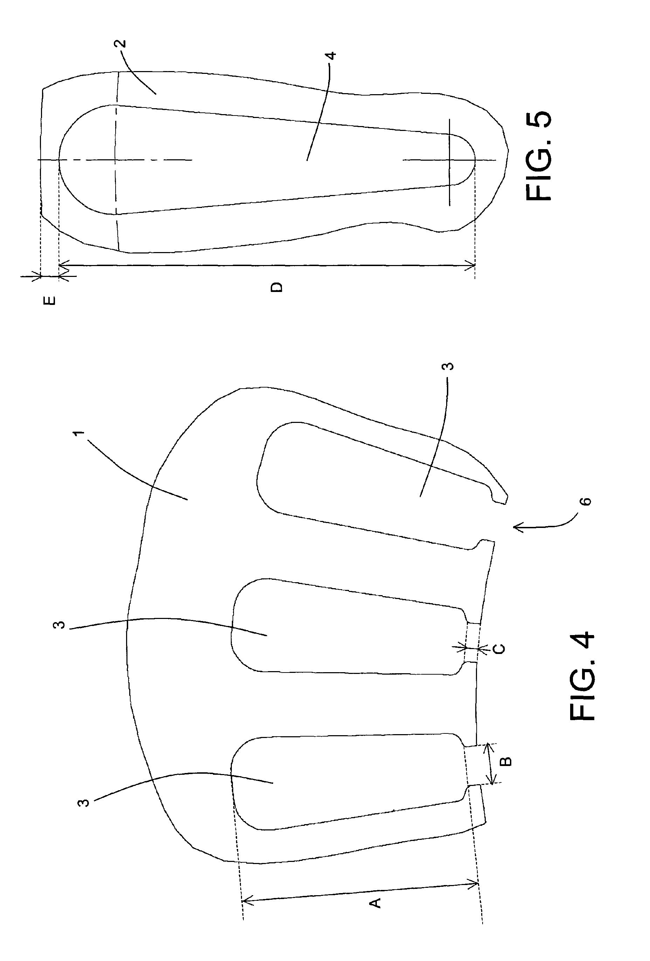

Moreover, in the preferred embodiment, the stator slots 3 are around 15 mm deep (depth A in Figure 4), and have an opening 6 facing the rotor, around 2.4 mm wide (width B in Figure 4), and a depth of around 0.8 mm (depth C in Figure 4).

The stator slots 3 also have an area of between 68 and 71 mm².

Similarly, in the preferred embodiment illustrated, the rotor slots 4 have an area of between 48 and 51 mm², are around 16 mm deep (depth D in Figure 5), and are around 0.7 mm from the outer edge of the relative rotor lamination 2 (distance E in Figure 5) .

The present invention brings important advantages.

The two-pole electric motor with 100 mm shaft height disclosed has a heat disposal capacity significantly greater than that of conventional motors.

This means that a current intensity significantly higher than for conventional windings can pass through the motor windings. As a result, the dimensions being equal, the motor has notably greater power than the motors known today.

The great heat disposal capacity is mainly given by the number of stator and rotor slots, but is also accentuated by the fact that the external diameter D1 of the stator lamination is greater than the conventional equivalents of similar motors, which are normally 152 mm.

The particular sizing and positioning of the stator and rotor slots, as well as the size of the air gap allowed an increase in motor performance.

It should also be noticed that the present invention is relatively easy to produce and even the cost linked to implementation of the invention is not very high when considered relative to the results which can be achieved with it.

The present invention may be subject to modifications and variations without thereby departing from the inventive concept.

All the details of the invention may be substituted by technically equivalent elements and all of the materials used, shapes and dimensions of the various components may be any according to requirements.

## Claims

1. A two-pole electric motor with 100 mm shaft height, comprising a stator lamination pack consisting of a plurality of stator laminations (1) and a rotor lamination pack consisting of a plurality of rotor laminations (2), there being a plurality of stator slots (3) in each stator lamination (1) and a plurality of rotor slots (4) in each rotor lamination (2), the motor being **characterised in that** there are thirty six stator slots (3) in each stator lamination (1), and **in that** there are twenty eight rotor slots (4) in each rotor lamination (2).

2. The electric motor according to claim 1, **characterised in that** the stator slots (3) are half-closed.

3. The electric motor according to claim 1 or 2, **characterised in that** the rotor slots (4) are closed.

4. The electric motor according to any of the foregoing claims, **characterised in that** there is an air gap (5) measuring less than 1 mm between the stator lamination pack and the rotor lamination pack.

5. The electric motor according to any of the foregoing claims, **characterised in that** the air gap (5) measures 0.5 mm.

6. The electric motor according to any of the foregoing claims, **characterised in that** each stator lamination (1) chiefly has the shape of a ring and has an external diameter (D1) of between 155 and 170 mm.

7. The electric motor according to claim 6, **characterised in that** the external diameter (D1) of the stator laminations (1) is around 162 mm.

8. The electric motor according to any of the foregoing claims, **characterised in that** each stator lamination (1) chiefly has the shape of a ring and has an internal diameter (D2) of between 80 and 90 mm.

9. The electric motor according to claim 8, **characterised in that** the internal diameter (D2) of the stator laminations (1) is around 86 mm.

10. The electric motor according to any of the foregoing claims, **characterised in that** the stator slots (3) are around 15 mm deep.

11. The electric motor according to any of the foregoing claims, **characterised in that** the stator slots (3) have an opening (6) towards the inside of the stator lamination (1) which is around 2.4 mm wide.

12. The electric motor according to any of the foregoing claims, **characterised in that** the stator slots (3) have an opening (6) towards the inside of the stator lamination (1) which is around 0.8 mm deep.

13. The electric motor according to any of the foregoing claims, **characterised in that** the stator slots (3) have an area of between 68 and 71 mm².

14. The electric motor according to any of the foregoing claims, **characterised in that** the rotor slots (4) have an area of between 48 and 51 mm².

15. The electric motor according to any of the foregoing claims, **characterised in that** the rotor slots (4) are around 16 mm deep.

16. The electric motor according to any of the foregoing claims, **characterised in that** the rotor slots (4) are around 0.7 mm from the outer edge of the relative rotor lamination (2).

## Amended claims

### Amended claims in accordance with Rule 86(2) EPC.

**1.** A two-pole electric motor with 100 mm shaft height, comprising a stator lamination pack consisting of a plurality of stator laminations (1) and a rotor lamination pack consisting of a plurality of rotor laminations (2), there being a plurality of stator slots (3) in each stator lamination (1) evenly distributed along an inner edge of the stator lamination (1), and a plurality of rotor slots (4) in each rotor lamination (2) evenly distributed along an outer edge of the rotor lamination (2), the motor being **characterised in that** there are thirty six stator slots (3) in each stator lamination (1), and **in that** there are twenty eight rotor slots (4) in each rotor lamination (2).

**2.** The electric motor according to claim 1, **characterised in that** the stator slots (3) are half-closed.

**3.** The electric motor according to claim 1 or 2, **characterised in that** the rotor slots (4) are closed.

**4.** The electric motor according to any of the
